# EUROPÄISCHE PATENTSCHRIFT

(11) **EP 1 558 546 B1**
(45) Veröffentlichungstag und Bekanntmachung des Hinweises auf die Patenterteilung: **28.12.2011**
(21) Anmeldenummer: 03769186.2
(22) Anmeldetag: 12.09.2003
(51) Int. Cl.: C04B 41/84, F27B 9/20, B28B 11/04

(54) **BESCHICHTUNGSVERFAHREN FUR SANITARKERAMIK**
COATING METHOD FOR SANITARY CERAMIC
PROCEDE POUR RECOUVRIR UNE CERAMIQUE SANITAIRE

(30) Priorität: 12.09.2002 DE 10242515
(43) Veröffentlichungstag der Anmeldung: 03.08.2005
(73) Patentinhaber: Nanogate AG, 66287 Quierschied-Göttelborn (DE)
(72) Erfinder: HANISCH, Michael, 66583 Spiesen-Elversberg (DE); BERGER, Dr. Leif, 55116 Mainz (DE); KRAKEHL, Joachim, 67549 Worms (DE); KUNTZ, Michael, 66424 Homburg (DE)
(74) Vertreter: von Kreisler Selting Werner
(86) Internationale Anmeldenummer: PCT/DE2003/003048
(87) Internationale Veröffentlichungsnummer: WO 2004/026793

(56) Entgegenhaltungen:
- WO-A-01/23101
- DE-A- 19 624 816
- FR-A- 1 323 478

## Beschreibung

Die Beschichtung von Gegenständen wird per se seit langem verwendet, um bestimmte erwünschte Oberflächeneigenschaften zu erzielen, etwa eine Hydrophobierung und/oder Oleophobierung und/oder schmutzabweisende- und/oder Antihafteigenschaften. Ein Verfahren hierzu ist beispielsweise aus der WO 01123101 A2 bekannt. Es wird dort vorgeschlagen, daß zur Beschichtung eines Gegenstandes, bei welchem eine Schicht mit fluorhaltigem Material bei erhöhter Temperatur auf dem Gegenstand vorgesehen wird, ein Material auf den Gegenstand aufgebracht wird, das bei erhöhter Temperatur einen meßbaren Dampfdruck besitzt und in welchem Fluor organisch gebunden ist. Es wird auch diskutiert, daß das Material bei einer erhöhten Temperatur zwischen 200 ° C und 300 ° C aufgebracht wird und bevorzugt aufgedampft wird, wobei auch vorgeschlagen wird, daß das Material aus einem erwärmten Vorrat und/oder einer erwärmten Düse tretend aufgedampft und/oder aufgedunstet wird.

Dazu soll das Material aus einem Vorrat abgedampft bzw. abgedunstet werden, der selbst erwärmt ist und/oder es wird durch eine erwärmte Düse auf den Gegenstand hin aufgebracht. Alternativ wird angegeben, daß sich der Vorrat auf einigen einer Vielzahl gemeinsam erwärmter Gegenstände oder auf Teilflächen derselben, befinden kann.

Es wird nun erwähnt, daß es auch möglich sei, große flächige Gegenstände wie z.B. Fensterscheiben oder Windschutzscheiben mit einer Düsenanordnung zu beschichten und daß die Temperatur des Materials respektive der Düse bevorzugt höher als jene des Gegenstandes zu wählen sei. Dies habe den Vorteil, daß das Material bzw. die silizium-organische fluorhaltige Substanz dann am kälteren Gegenstand kondensiert bzw. sich ablagert und so den Schichtaufbau bewirkt. Bevorzugt sei, wenn zwar die Temperatur der Substanz höher als jene des Gegenstandes ist, aber die Temperatur des Gegenstandes noch so hoch ist, daß die Substanz auf dem Gegenstand ohne weiteres vernetzt.

Als bevorzugt werden Fluor- Silizium-Verbindungen, insbesondere Perfluoralkylsilane angegegeben. Dabei sind zwischen Si-Atomen und Fluor-Atomen im Molekül Spacergruppen vorgesehen, die wenigstens die Länge -(CH₂)₂ aufweisen. Ausgehend von Fluorsilan- und/oder Perfluoralkylsilan-Monomeren werden bevorzugt oligomere Kondensate für die Substanz verwendet, die soweit oligomerisiert sind, daß ein noch meßbarer Dampfdruck vorhanden ist. Die Oligomerisierung ist vorteilhaft, weil sich diese Oligomer-Substanzen besser handhaben lassen als Monomere und trotzdem noch einen meßbaren Dampfdruck aufweisen, sich also weder durch zu hohe Temperaturen zersetzen, noch, bei niedrigeren Temperaturen, vernetzen. Bevorzugt wird der Oligomerisierungsgrad so gewählt wird, daß zwischen 3 und 25, bevorzugt zwischen 15 und 20 Monomere oligomerisiert werden. Die Oligomere sind dabei noch untereinander vernetzbar. Es ist offenbart worden, daß das Material aus einer Düse auf eine in einem Ofen beheizte Glasscheibe aufgebracht werden kann.

FR 1 323 478 A1 beschreibt ein Verfahren zur Herstellung eines heramischen Körpers mit einer Beschichtung eines Alkoxysilanes, wobei der körper in einem Tunnelofen gebrannt wird.

Als problematisch hat sich nun die Herstellung von haltbaren und doch preiswerten Beschichtungen auf Sanitärkeramik erwiesen.

Die Aufgabe der vorliegenden Erfindung besteht in der Bereitstellung eines Verfahrens, das gut zu implementieren und zu realisieren ist, wobei eine haltbare und doch preiswerte Beschichtung auf Sanitärkeramikerhalten wird.

Die Lösung der vorgenannten Aufgabe erfolgt mit dem Verfahren gemäβ dem Patentanspruch.

Gemäß einem ersten wesentlichen Aspekt des Verfahrens wird somit vorgeschlagen, daß zur Herstellung einer gebrannten Sanitärkeramik wie einer Fliese oder Kachel, eines Waschbekkens, einer Wanne etc. mit einem gebrannten Körper und einer beschichteten Oberfläche, der Körper in einem langgestreckten Tunnel-Ofen gebrannt und die Beschichtung in der Abkühlzone des Ofens durch aufgedunstete Perfluoralkylsilane erzeugt wird.

Es wurde gefunden, daß sich hervorragend haltbare und gleichmäßige Beschichtungen erzielen lassen, wenn die Körper noch vom Brennen komplett durchgewärmt beschichtet werden, also nicht nur oberflächlich aufgeheizt werden. Dieses Verfahren ergibt aber nicht nur besonders gute Schichteigenschaften, sondern ist auch gut zu implementieren und kostengünstig zu realisieren, da eine neuerliche Aufheizung des gefertigten Körpers nicht erforderlich ist. Zudem führt die Bewegung der Körper durch den Tunnelofen, sei diese durch Transport auf Wagen, an Haken hängend oder auf andere Weise bewirkt, zu einer Luftbewegung, durch welche das Material an die Körper gelangt, ohne daß weitere Maßnahmen zwingend erforderlich sind.

Bevorzugt werden die Perfluoralkylsilane in einer Zone mit einer Temperatur von unter 400°C, insbesondere um oder unter 300°C aufgebracht. Es sind auch Temperaturen von etwa 200 bis 250°C verwendbar. Ausschlaggebend ist, daß die große Wärmekapazität des Körpers eine für die Durchhärtung und Vernetzung ausreichende Zeit bis zur Abkühlung gewährleistet, ohne daß zusätzlich Heizenergie oder dergl. aufgebracht werden muß.

Die Perfluoralkylsilane werden unter Atmosphärenbedingungen aufgebracht . Mit anderen Worten sind keine besonderen Maßnahmen zur Abdichtung, Isolation oder dergl. des Ofens erforderlich als ohnehin schon vorgenommen werden. Dies trägt zu einer weiter vereinfachten Handhabung bei.

Die Perfluoralkylsilane werden bei offenem Ofenende aufgebracht . Falls gewünscht, kann also der Ofen in einem voll kontinuierlichen Prozeß offen benutzt werden, ohne daß das hier verwendete Verfahren beeinträchtigt ist.

Besonders bevorzugt ist es, wenn die Aushärtung noch unter der Strahlungswärme des Ofens beginnt, also der Bereich nicht gegen Strahlungswärme abgeschirmt ist. Dies führt zu einer besonders guten Vernetzung ungeachtet des Umstandes, daß zwischen Düse und Körper dunstförmige Perfluoralkylsilane dieser Strahlung gleichfalls ausgesetzt sind.

Es werden Perfluoralkylsilane auf den Körper aufgebracht, die bei erhöhter Temperatur einen meßbaren Dampfdruck bezitzen. . Diese werden in einer besonders bevorzugten Variante durch Druckgasbeaufschlagung aus einem Vorrat in den Ofen auf den Körper aufgebracht.

Die Erfindung wird im folgenden anhand eines Ausführungsbeispieles beschrieben.

Gemäß der Erfindung ist ein Tunnelofen in seiner Abkühlzone mit einer Düsenanordnung versehen, deren Öffnungen auf den im Tunnelofen zu brennenden Keramikkörper weisen und die mit einem druckbeaufschlagten Vorratsbehälter für ein oleophobierende und/oder hydrophobierendes Perfluoralkylsilane, die bei erhöhter Temperatur einen meßbaren Dampfdruck besitzen verbunden sind.

Die Düsen sind in einem Bereich angeordnet, bei dem die Temperatur der Körper während der Benutzung um 280°C beträgt und der weder gegen Strahlungswärme noch gegen den Zutritt von Atmopahärenluft abgeschirmt ist.

Die Anordnung wird verwendet wie folgt:

Der Tunnelofen wird beheizt.

Es werden dann Keramik-Waschbeckenrohlinge gefertigt und in üblicher Weise für den Transport durch den beheizten Tunnelofen bereitgestellt, in welchem sie in per se bekannter Weise und mit üblichem Temperaturverlauf bezüglich des Aufheizens, Brennen und Abkühlens gebrannt werden.

Während des Abkühlens laufen die Keramik-Waschbeckenrohlinge an der Düsenanordnung vorbei. Zugleich erfolgt eine Druckbeaufschlagung der Vorratsbehälter, so daß Perfluoralkylsilan haltiges Fluid aus den Düsen austritt. Diese Perfluoralkylsilane bewegen sich in Richtung auf die vorbeiziehenden, noch halbfertigen Keramik-Glaschbeckenrohlinge und werden dabei durch die Luftbewegung weitgehend gleichmäßig verteilt.

Während der Körper weiter abkühlt, vernetzen die Perfluoralkylsilane und härten aus. Nach dem Abkühlen ergibt sich eine sehr gleichmäßige, hochfeste Beschichtung.

In einem weiteren Ausführungsbeispiel werden Fliesen durch den Tunnelofen gerührt. Auch hier ergibt sich eine sehr gleichmäßige, hochfeste Beschichtung.

Anders als vorstehend erwähnt, ist es möglich, die Perfluoralkylsilane im Vorrat zu beheizen. Dabei wird bevorzugt die Temperatur niedriger gewählt als jene des vorbeigeführten Körpers.

## Patentansprüche

1. Verfahren zur Herstellung einer gebrannten Sanitärkeramik mit einem gebrannten Körper und einer oleophob und/oder hydrophob beschichteten Oberfläche, wobei der Körper in einem langgestreckten Tunnelofen gebrannt wird,
**dadurch gekennzeichnet, dass** man Perfluoralkylsilane die bei erhöhter Temperatur einen meβbaren Dampf- druck besitzen und bei denen zwischen Si-Atomen und Fluoratomen im Molekül Spacer-Gruppen vorgesehen sind, die wenigstens die Länge -(CH₂)₂- aufweisen, in der Abkühlzone des Ofens bei offenem Ofenende unter Atmosphärenbedingungen auf den Körper im Ofen aufdunstet,
wobei die in die Abkühlzone eingebrachten Perfluoralkylsilane eine geringere Temperatur als der vorbeigeführte Körper besitzen,
und, während der Körper weiter abkühlt, die Perfluoralkylsilane vernetzen und aushärten.

## Claims

1. A process for preparing a fired sanitary ceramic comprising a fired body and a surface having an oleophobic and/or hydrophobic coating, said body being fired in an elongated tunnel kiln,
**characterized in that** perfluoroalkylsilanes that have a measurable vapor pressure at an elevated temperature and in which spacer groups having a length of at least -(CH₂)₂- are provided in the molecule between Si atoms and fluorine atoms are deposited by vapor deposition onto the body in the kiln in the cooling zone of the kiln under atmospheric conditions while an end of the kiln is open,
wherein said perfluoroalkylsilanes introduced in the cooling zone have a lower temperature than the body moved through the zone, and
while the body is cooling down further, said perfluoroalkylsilanes will cross-link and harden.

## Revendications

1. Procédé pour la préparation d'une céramique sanitaire cuite comprenant un corps cuit et une surface avec un revêtement oléophobe et/ou hydrophobe, ledit corps étant cuit dans un four tunnel allongé,
**caractérisé en ce que** l'on dépose des perfluoroalkylsilanes ayant une pression de vapeur mesurable à température élevée, et dans lesquels des groupes espaceurs avec une longueur d'au moins -(CH₂)₂- sont procurés entre des atomes de Si et des atomes de fluore dans la molécule, en phase vapeur sur le corps dans la zone de refroidissement du four sous des conditions atmosphériques pendant qu'une extrémité du four est ouverte,
les perfluoroalkylsilanes introduits dans la zone de refroidissement ayant une température inférieure à celle du corps qui est passé à travers,
et pendant que le corps continue de refroidir, les perfluoroalkylsilanes se réticulent et durcissent.
